# EUROPEAN PATENT APPLICATION

(11) **EP 3 832 161 A1**
(43) Date of publication of application: **09.06.2021**
(21) Application number: 19887834.0
(22) Date of filing: 19.11.2019
(51) Int. Cl.: F16H 3/66, F16D 41/12, B60L 15/00

(54) **VEHICULAR DRIVING APPARATUS**

(30) Priority: 19.11.2018 JP 2018216717
(71) Applicant: AISIN AW CO., LTD., Fujiicho Anjo-shi Aichi 444-1192 (JP)
(72) Inventor: NAKASHIMA, Keisuke, Anjo-shi, Aichi 444-1192 (JP)
(74) Representative: Kramer Barske Schmidtchen Patentanwälte PartG mbB
(86) International application number: PCT/JP2019/045279
(87) International publication number: WO 2020/105635

(57) **Abstract**

A vehicle drive device (1) includes a rotating electrical machine, an output member (O), and a reduction planetary gear device (PG2). The output member (O) and the reduction planetary gear device (PG2) are coaxially disposed side by side. The reduction planetary gear device (PG2) includes a third rotating element (R2) that is selectively fixed to a case (2) by an engagement device (65). A support bearing (82) that rotatably supports the third rotating element (R2) is radially supported by the output member (O).

## Description

### TECHNICAL FIELD

The present invention relates to a vehicle drive device.

### BACKGROUND ART

A vehicle drive device including a rotating electrical machine, a reduction planetary gear device, and a case that contains the rotating electrical machine and the reduction planetary gear device is disclosed in, for example, JP H06-339248 A (Patent Literature 1). In the device of Patent Literature 1, a ring gear of the reduction planetary gear device is always fixed to the case, but it is conceivable that an engagement device is interposed between the ring gear and the case so as to enable release of the fixation of the ring gear.

Such a configuration in which the engagement device enables selective fixation of the ring gear to the case is disclosed in JP 2017-197128 A (Patent Literature 2). In a device of Patent Literature 2, in order that a ring gear [second ring gear 22] becomes rotatable when its fixation is released, the ring gear and a member [ring gear flange 221] that supports the ring gear are radially supported on a case [case 60] through a bearing [bearing 91] (see FIG. 2 of Patent Literature 2).

### CITATIONS LIST

### PATENT LITERATURE

Patent Literature 1: JP H06-339248 A
Patent Literature 2: JP 2017-197128 A

### SUMMARY OF INVENTION

### TECHNICAL PROBLEMS

However, in a configuration in which the ring gear is supported on the case through the bearing as in Patent Literature 2, when the ring gear is fixed, the bearing is also fixed. Hence, it results in continuous contact between a roller and a race in the same phase in the bearing, and there is a possibility of occurrence of dents.

Hence, it is desired to easily achieve protection of a bearing that rotatably supports a ring gear of a reduction planetary gear device in a vehicle drive device including an engagement device that enables selective fixation of the ring gear to a case.

### SOLUTIONS TO PROBLEMS

A vehicle drive device according to the present disclosure includes:
a rotating electrical machine;
an output member that is drive-coupled to wheels;
a reduction planetary gear device provided in a power transmission path connecting the rotating electrical machine to the output member; and
a case that contains the rotating electrical machine and the reduction planetary gear device, and
the output member and the reduction planetary gear device are coaxially and axially disposed side by side,
the reduction planetary gear device includes a first rotating element that is drive-coupled to the rotating electrical machine; a second rotating element that is drive-coupled to the output member; and a third rotating element that is selectively fixed to the case by an engagement device, and
a support bearing that rotatably supports the third rotating element is radially supported by the output member.

According to this configuration, the support bearing that rotatably and radially supports the third rotating element is radially supported by the output member that rotates in conjunction with the wheels, instead of by the case that is always irrotational. Hence, even when the third rotating element is fixed by the engagement device, as long as the wheels rotate, the support bearing also rotates, and thus, it is easy to avoid a specific-phase state from being maintained for a long period of time. Thus, protection of a bearing (the support bearing) that rotatably supports the ring gear can be easily achieved.

Further features and advantages of a technique according to the present disclosure will become more apparent from the following description of illustrative and non-restrictive embodiments which will be described with reference to drawings.

### BRIEF DESCRIPTION OF DRAWINGS

FIG. 1 is a skeleton diagram of a vehicle drive device of an embodiment.
FIG. 2 is a cross-sectional view of a first selectable one-way clutch.
FIG. 3 is a cross-sectional view of a second selectable one-way clutch.
FIG. 4 is an illustrative diagram of operation of the selectable one-way clutch.
FIG. 5 is a partial cross-sectional view of the vehicle drive device.
FIG. 6 is a partially enlarged view of FIG. 5.
FIG. 7 is a partially enlarged view of FIG. 5.

### DESCRIPTION OF EMBODIMENTS

An embodiment of a vehicle drive device will be described with reference to the drawings.

In the following description, a "rotating electrical machine" is used as a concept that includes all of a motor, a generator, and a motor-generator that functions as both a motor and a generator as necessary.

In addition, the term "drive-coupled" refers to a state in which two rotating elements are coupled together such that they can transmit drive power. This concept includes a state in which two rotating elements are coupled together such that they rotate together, and a state in which two rotating elements are coupled together through one or more power transmission members such that they can transmit drive power. Such power transmission members include various types of members (shafts, gear mechanisms, belts, chains, etc.) that transmit rotation at the same speed or at a changed speed, and may include devices (friction engagement devices, mesh engagement devices, etc.) that selectively transmit rotation and drive power.

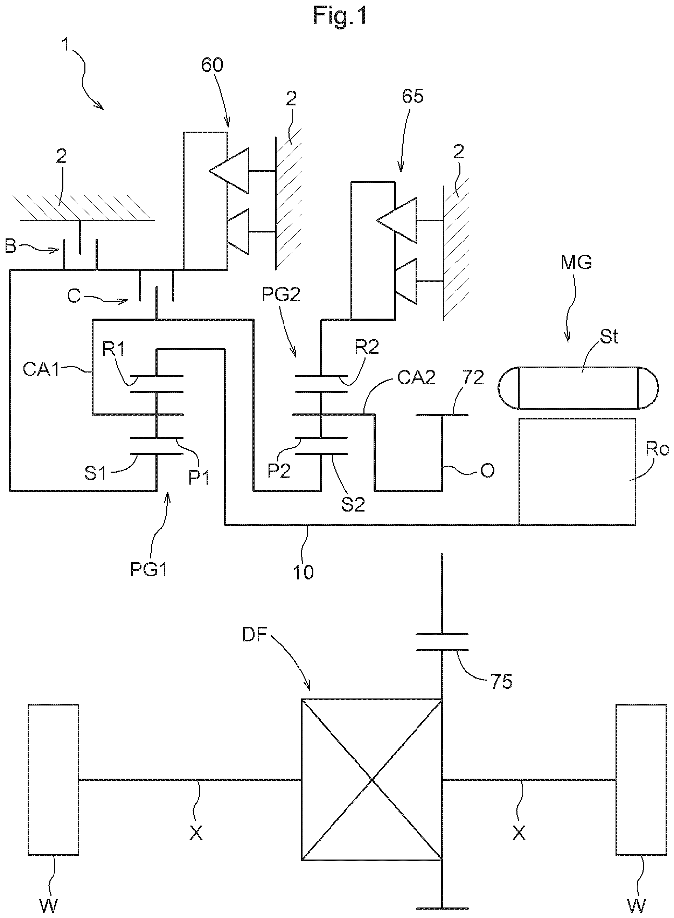

As shown in FIG. 1, a vehicle drive device 1 of the present embodiment includes a rotating electrical machine MG, and allows output torque from the rotating electrical machine MG to be transmitted to wheels W, by which a vehicle travels. Note that the configuration may be such that an internal combustion engine (a gasoline engine, a diesel engine, etc.) is provided in the vehicle, and the vehicle drive device 1 allows output torque from at least either one of the internal combustion engine and the rotating electrical machine MG to be transmitted to the wheels W, by which the vehicle travels.

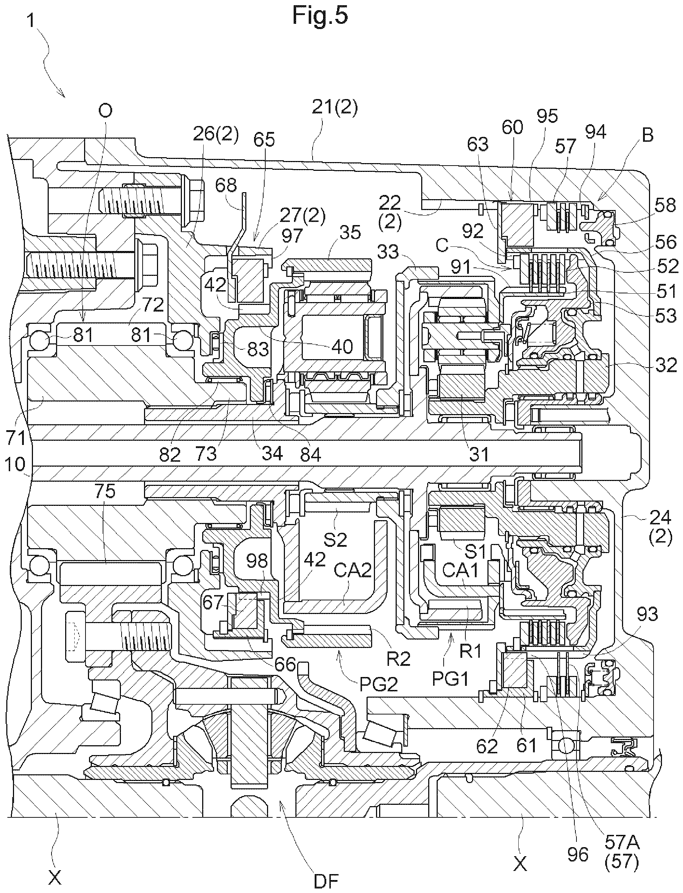

The vehicle drive device 1 includes the rotating electrical machine MG, an output member O that is drive-coupled to the wheels W, a first planetary gear device PG1, and a second planetary gear device PG2. The first planetary gear device PG1 and the second planetary gear device PG2 are provided in this order in a power transmission path connecting the rotating electrical machine MG to the output member O. In addition, the vehicle drive device 1 includes a clutch C, a brake B, a first selectable one-way clutch (hereinafter, abbreviated as "first SOWC") 60, and a second selectable one-way clutch (likewise, abbreviated as "second SOWC") 65. The rotating electrical machine MG, the output member O, the first planetary gear device PG1, the second planetary gear device PG2, the clutch C, the brake B, the first SOWC 60, and the second SOWC 65 are contained in a case 2 (see FIG. 5).

The rotating electrical machine MG, the first planetary gear device PG1, the second planetary gear device PG2, and the output member O are coaxially disposed. In addition, the rotating electrical machine MG, the output member O, the second planetary gear device PG2, and the first planetary gear device PG1 are axially disposed side by side in this order. In addition, when an axis along which the rotating electrical machine MG, the first planetary gear device PG1, the second planetary gear device PG2, and the output member O are disposed is a first axis, an output differential gear device DF and axles X are disposed along a second axis parallel to the first axis. The output member O is drive-coupled to a pair of the left and right wheels W through the output differential gear device DF and a pair of the left and right axles X.

The rotating electrical machine MG includes a stator St fixed to the case 2; and a rotor Ro rotatably supported on the stator St. The rotating electrical machine MG is electrically connected to an electrical storage device (not shown) such as a battery or a capacitor, and performs motoring by receiving electric power supply from the electrical storage device, or supplies and stores electric power generated by inertial force, etc., of the vehicle in the electrical storage device. The rotor Ro is coupled to a rotor shaft 10 such that they rotate together. The rotor shaft 10 is disposed passing through the radial inner sides of the output member O, the second planetary gear device PG2, and the first planetary gear device PG1.

The first planetary gear device PG1 includes a single-pinion planetary gear mechanism. The first planetary gear device PG1 includes a first sun gear S1, a first pinion gear PI, a first carrier CA1, and a first ring gear R1. The rotational speed is high in the order of the first sun gear S1, the first carrier CA1, and the first ring gear R1. The first sun gear S1 is selectively fixed to the case 2 by the brake B and the first SOWC 60. The first ring gear R1 is drive-coupled to the rotating electrical machine MG through the rotor shaft 10. The first pinion gear P1 that meshes with both the first sun gear S1 and the first ring gear R1 is supported by the first carrier CA1. The first carrier CA1 is drive-coupled to the output member O through the second planetary gear device PG2. In the present embodiment, the first planetary gear device PG1 corresponds to a "transmission planetary gear device".

The second planetary gear device PG2 includes a single-pinion planetary gear mechanism. The second planetary gear device PG2 includes a second sun gear S2, a second pinion gear P2, a second carrier CA2, and a second ring gear R2. The rotational speed is high in the order of the second sun gear S2, the second carrier CA2, and the second ring gear R2. The second sun gear S2 is drive-coupled to the rotating electrical machine MG through the first planetary gear device PG1. The second ring gear R2 is selectively fixed to the case 2 by the second SOWC 65. The second pinion gear P2 that meshes with both the second sun gear S2 and the second ring gear R2 is supported by the second carrier CA2. The second carrier CA2 is drive-coupled to the output member O. In the present embodiment, the second planetary gear device PG2 corresponds to a "reduction planetary gear device". In addition, the second sun gear S2 corresponds to a "first rotating element", the second carrier CA2 corresponds to a "second rotating element", and the second ring gear R2 corresponds to a "third rotating element" and a "ring gear".

More specifically, as shown in FIG. 5, a sun gear forming member 31 having the first sun gear S1 formed therein is coupled to a brake hub 56 through a sun gear coupling member 32. The sun gear forming member 31 is selectively fixed to the case 2 by the brake B and the first SOWC 60 which are supported by the brake hub 56. The first carrier CA1 is coupled to the second sun gear S2 through an intermediate coupling member 33, and is further drive-coupled to the output member O through the second carrier CA2 and a carrier coupling member 34. In addition, a ring gear forming member 35 having the second ring gear R2 formed therein is coupled to a ring gear coupling member 40, and is selectively fixed to the case 2 by the second SOWC 65 supported by the ring gear coupling member 40.

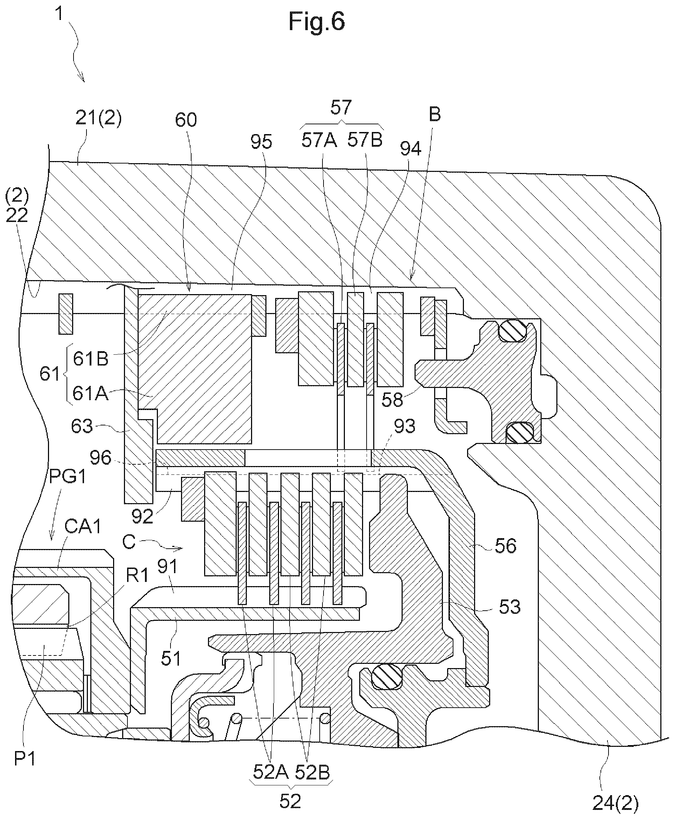

As shown in FIGS. 5 and 6, the clutch C includes a cylindrical clutch hub 51, friction plates 52, and a piston 53. In the present embodiment, the brake hub 56 of the brake B also serves as a clutch drum of the clutch C. The clutch hub 51 is coupled to the first carrier CA1. The friction plates 52 include inner friction plates 52A and outer friction plates 52B that pair with each other and are axially and alternately disposed.

The inner friction plates 52A are supported by the clutch hub 51. The inner friction plates 52A are engaged, at their inner circumferential portions, with spline teeth 91 formed on an outer circumferential surface of the clutch hub 51, and are thereby supported such that rotation of the inner friction plates 52A is restricted and the inner friction plates 52A are axially slidable. The outer friction plates 52B are supported by the brake hub 56 whish also serves as the clutch drum. The outer friction plates 52B are engaged, at their outer circumferential portions, with spline teeth 92 formed on an inner circumferential surface of the brake hub 56, and are thereby supported such that rotation of the outer friction plates 52B is restricted and the outer friction plates 52B are axially slidable. The piston 53 is driven by hydraulic pressure, and presses the friction plates 52 in pairs (the inner friction plates 52A and the outer friction plates 52B) against each other and thereby allows the first sun gear S1 and the first carrier CA1 to rotate together.

The brake B includes the cylindrical brake hub 56, friction plates 57, and a piston 58. In the present embodiment, a cylindrical surface part 22 formed on a circumferential wall 21 of the case 2 functions as a brake drum of the brake B. The brake hub 56 whish also serves as the clutch drum is coupled to the sun gear forming member 31. The friction plates 57 include inner friction plates 57A and outer friction plates 57B that pair with each other and are axially and alternately disposed.

The inner friction plates 57A are supported by the brake hub 56. The inner friction plates 57A are engaged, at their inner circumferential portions, with spline teeth 93 formed on an outer circumferential surface of the brake hub 56, and are thereby supported such that rotation of the inner friction plates 57A is restricted and the inner friction plates 57A are axially slidable. The outer friction plates 57B are supported by the cylindrical surface portion 22 that functions as the brake drum. The outer friction plates 57B are engaged, at their outer circumferential portions, with spline teeth 94 formed on the cylindrical surface portion 22, and are thereby supported such that rotation of the outer friction plates 57B is restricted and the outer friction plates 57B are axially slidable. The piston 58 is driven by hydraulic pressure, and presses the friction plates 57 in pairs (the inner friction plates 57A and the outer friction plates 57B) against each other and thereby fixes the first sun gear S1 to the case 2.

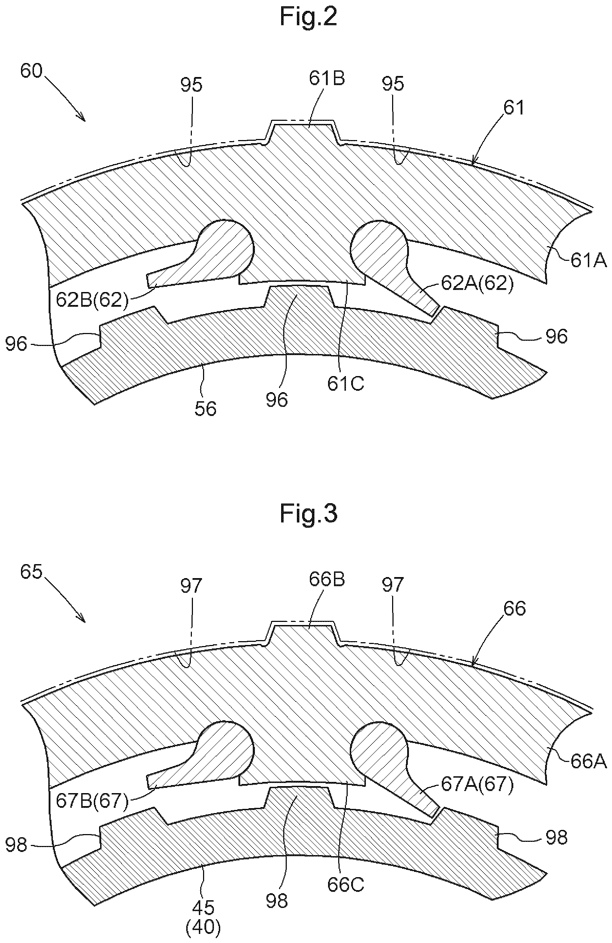

As shown in FIGS. 2 and 5, the first SOWC 60 includes an outer race 61 and engagement pieces 62. The outer race 61 includes a cylindrical main body part 61A and an outer engagement part 61B that protrudes to a radial outer side from the main body part 61A. In addition, the outer race 61 includes a retaining part 61C that swingably retains the engagement pieces 62. The engagement pieces 62 include a first engagement piece 62A and a second engagement piece 62B. The first engagement piece 62A and the second engagement piece 62B that pair with each other are provided so as to be oppositely inclined. The first engagement piece 62A and the second engagement piece 62B are configured to be swingable about their base end portions retained by the retaining part 61C, by operating a switching lever 63 by an actuator.

The outer race 61 of the first SOWC 60 is supported by the cylindrical surface part 22 of the circumferential wall 21 of the case 2. The outer race 61 is engaged, at the outer engagement part 61B provided at its outer circumferential portion, with spline teeth 95 formed on the cylindrical surface part 22, and is thereby supported such that rotation of the outer race 61 is restricted. In addition, the outer race 61 (the retaining part 61C) is supported by the brake hub 56 from its radial inner side. The engagement pieces 62 in a pair (the first engagement piece 62A and the second engagement piece 62B) each can be switched between a state in which the entire piece is held more on a radial outer side than the innermost circumferential surface of the retaining part 61C (a held state; the state of the second engagement piece 62B in FIG. 2) and a state in which an end portion protrudes more to a radial inner side than the innermost circumferential surface of the retaining part 61C (a protruding state; the state of the first engagement piece 62A in FIG. 2). The engagement pieces 62 in a pair (the first engagement piece 62A and the second engagement piece 62B) can be engaged, in the protruding state, with spline teeth 96 from opposite sides in a circumferential direction, the spline teeth 96 being formed on the outer circumferential surface of the brake hub 56.

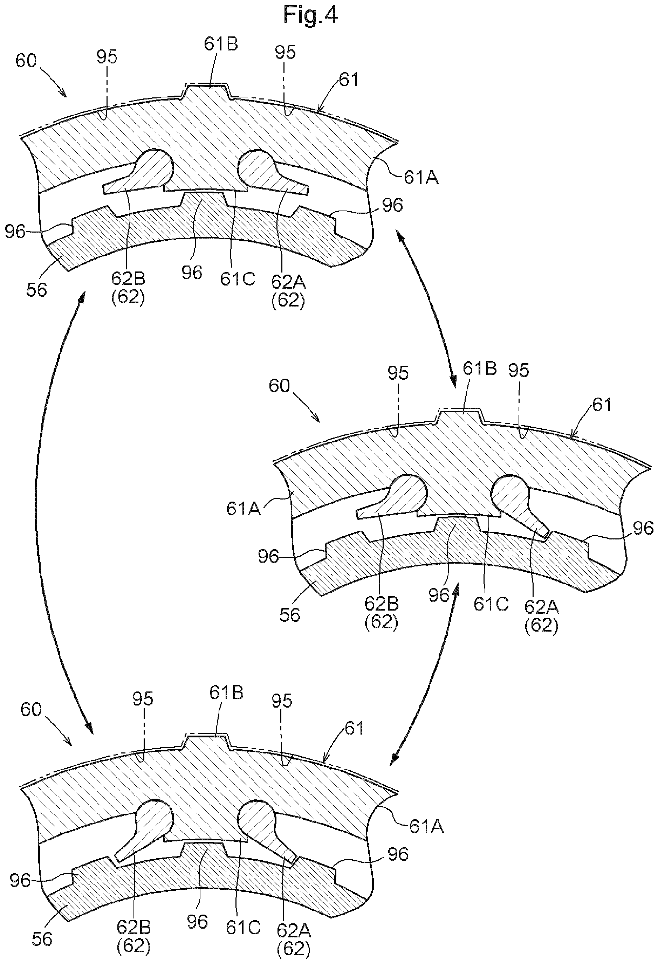

The first SOWC 60 is a kind of "mesh engagement device" that can be switched between at least a free state in which the first sun gear S1 is allowed to rotate in both directions and a lock state in which rotation of the first sun gear S1 is blocked, depending on whether there is mechanical meshing between the engagement pieces 62 and the spline teeth 96. The first SOWC 60 of the present embodiment can also be further switched to a one-way state, and thus can be switched between the free state (top in FIG. 4), the one-way state (middle in FIG. 4), and the lock state (bottom in FIG. 4). The free state is implemented by both the engagement pieces 62A and 62B in a pair being not engaged with the spline teeth 96. The one-way state is implemented by one of the engagement pieces 62A and 62B in a pair (which is the engagement piece 62A in an example shown in the drawing, but may be the engagement piece 62B depending on the direction of rotation to be restricted) being engaged with a spline tooth 96 from one side in the circumferential direction. The lock state is implemented by the engagement pieces 62A and 62B in a pair being engaged with the spline teeth 96 from both sides in the circumferential direction.

As shown in FIGS. 3 and 5, the second SOWC 65 includes an outer race 66 and engagement pieces 67. The outer race 66 includes a cylindrical main body part 66A and an outer engagement part 66B that protrudes to a radial outer side from the main body part 66A. In addition, the outer race 66 includes a retaining part 66C that swingably retains the engagement pieces 67. The engagement pieces 67 include a first engagement piece 67A and a second engagement piece 67B. The first engagement piece 67A and the second engagement piece 67B that pair with each other are provided so as to be oppositely inclined. The first engagement piece 67A and the second engagement piece 67B are configured to be swingable about their base end portions retained by the retaining part 66C, by operating a switching lever 68 by an actuator.

The outer race 66 of the second SOWC 65 is supported by a cylindrical part 27 of a middle support wall 26 of the case 2. The outer race 66 is engaged, at the outer engagement part 66B provided at its outer circumferential portion, with spline teeth 97 formed on the cylindrical part 27, and is thereby supported such that rotation of the outer race 66 is restricted. In addition, the outer race 66 (the retaining part 66C) is supported by a supporting part 42 of the ring gear coupling member 40 which will be described later from its radial inner side. The engagement pieces 67 in a pair (the first engagement piece 67A and the second engagement piece 67B) each can be switched between a state in which the entire piece is held more on a radial outer side than the innermost circumferential surface of the retaining part 66C (a held state; the state of the second engagement piece 67B in FIG. 3) and a state in which an end portion protrudes more to a radial inner side than the innermost circumferential surface of the retaining part 66C (a protruding state; the state of the first engagement piece 67A in FIG. 3). The engagement pieces 67 in a pair (the first engagement piece 67A and the second engagement piece 67B) can be engaged, in the protruding state, with spline teeth 98 from opposite sides in a circumferential direction, the spline teeth 98 being formed on a middle cylindrical part 45 of the ring gear coupling member 40.

The second SOWC 65 is a kind of "mesh engagement device" that can be switched between at least a free state in which the second ring gear R2 is allowed to rotate in both directions and a lock state in which rotation of the second ring gear R2 is blocked, depending on whether there is mechanical meshing between the engagement pieces 67 and the spline teeth 98. As with the first SOWC 60, the second SOWC 65 of the present embodiment can also be further switched to a one-way state, and thus can be switched between the free state, the one-way state, and the lock state. The free state is implemented by both the engagement pieces 67 in a pair being not engaged with the spline teeth 98. The one-way state is implemented by one of the engagement pieces 67 in a pair being engaged with a spline tooth 98 from one side in the circumferential direction. The lock state is implemented by the engagement pieces 67 in a pair being engaged with the spline teeth 98 from both sides in the circumferential direction.

In an engaged state of the brake B or a one-way state or lock state of the first SOWC 60, the first planetary gear device PG1 reduces the speed of rotation of the rotating electrical machine MG inputted to the first ring gear R1, and outputs the rotation from the first carrier CA1 (reduction state). In addition, in an engaged state of the clutch C, the first planetary gear device PG1 outputs rotation of the rotating electrical machine MG inputted to the first ring gear R1, from the first carrier CA1 at an unchanged rotational speed (direct-coupling state). As such, the first planetary gear device PG1 of the present embodiment is configured to be able to switch between a plurality of shift speeds (direct-coupling state/reduction state).

In a one-way state or lock state of the second SOWC 65, the second planetary gear device PG2 reduces the speed of rotation inputted to the second sun gear S2 from the first carrier CA1 through the intermediate coupling member 33, and outputs the rotation from the output member O. In addition, in a free state of the second SOWC 65, the second planetary gear device PG2 decouples each component provided more on an upstream side (rotating electrical machine MG side) than the second planetary gear device PG2 in the power transmission path from the wheels W.

The rotating electrical machine MG, the output member O, the first planetary gear device PG1, the second planetary gear device PG2, the clutch C, the brake B, the first SOWC 60, and the second SOWC 65 are contained in the case 2. As shown in FIGS. 5 to 7, the case 2 has the circumferential wall 21, an end-portion support wall 24, and the middle support wall 26. The circumferential wall 21 is formed in tubular shape that covers the exteriors of the rotating electrical machine MG, the output member O, the first planetary gear device PG1, the second planetary gear device PG2, the brake B, and the first SOWC 60. In an end-portion region on one axial side of the circumferential wall 21 there is formed the cylindrical surface part 22 having a cylindrical inner circumferential surface.

In the cylindrical surface part 22 there are formed the spline teeth 94 and the spline teeth 95. The spline teeth 94 and the spline teeth 95 are axially continuously and integrally formed. In other words, on the cylindrical surface part 22 of the circumferential wall 21 there are formed "second shared spline teeth" that function as both the spline teeth 94 and the spline teeth 95. The outer race 61 of the first SOWC 60 and the outer friction plates 57B of the brake B are supported on the second shared spline teeth in a shared manner such that they are axially disposed side by side.

The end-portion support wall 24 is formed in plate-like shape that covers an end portion on one axial side (the opposite side of the rotating electrical machine MG) of the circumferential wall 21. Note that the case 2 also includes a second end-portion support wall (not shown) that covers an end portion on the other axial side (rotating electrical machine MG side) of the circumferential wall 21. The middle support wall 26 is formed so as to radially extend as a whole between the output member O and the second planetary gear device PG2 in the axial direction. The middle support wall 26 is formed as a different part than the other parts of the case 2. In the present embodiment, the middle support wall 26 corresponds to a "supporting part" and the other parts of the case 2 (parts other than the middle support wall 26) correspond to a "case main body". The middle support wall 26 has the cylindrical part 27 having a cylindrical shape that axially protrudes. The cylindrical part 27 is formed so as to protrude to a second planetary gear device PG2 side from the middle support wall 26.

As shown in FIG. 5, the output member O, the second SOWC 65, the second planetary gear device PG2, the first planetary gear device PG1, the first SOWC 60, the clutch C, and the brake B are coaxially disposed. They are axially disposed side by side approximately in the order in which they are written. As shown in FIGS. 5 and 6, more on an end-portion support wall 24 side than the first planetary gear device PG1 and the second planetary gear device PG2, the first SOWC 60 and the brake B are disposed on a radial outer side with respect to the clutch C such that they are axially disposed side by side. In the present embodiment, the clutch C is disposed on a radial inner side of the brake hub 56 which also serves as the clutch drum, and the first SOWC 60 and the brake B are disposed on a radial outer side of the brake hub 56.

On the outer circumferential surface of the brake hub 56, the spline teeth 93 and the spline teeth 96 are axially continuously and integrally formed. In other words, on the outer circumferential surface of the brake hub 56 there are formed "first shared spline teeth" that function as both the spline teeth 93 and the spline teeth 96. The outer race 61 of the first SOWC 60 and the outer friction plates 57B of the brake B are supported on the first shared spline teeth in a shared manner such that they are axially disposed side by side, and can be engaged when the engagement pieces 62 of the first SOWC 60 swing and go into a protruding state.

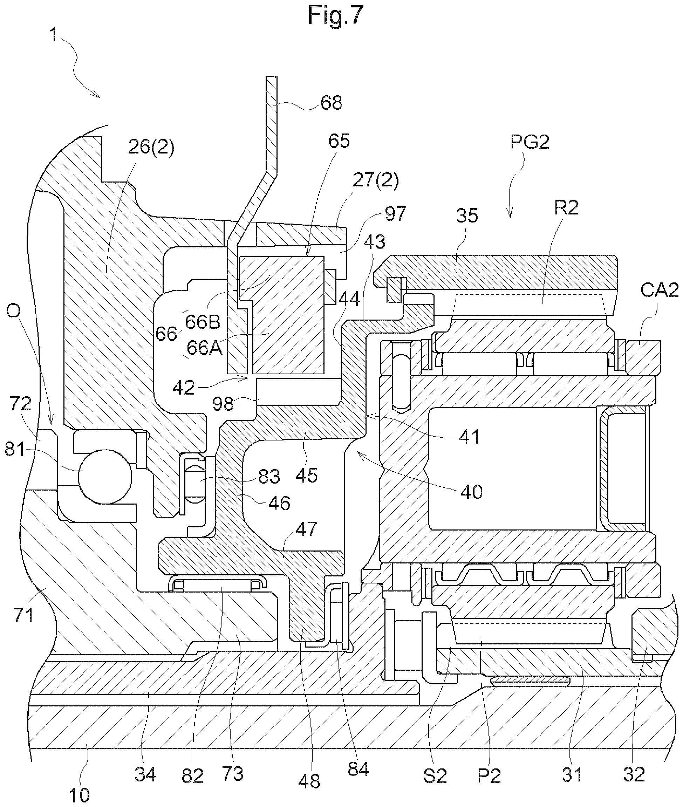

As shown in FIGS. 5 and 7, more on a middle support wall 26 side than the first planetary gear device PG1 and the second planetary gear device PG2, the second carrier CA is coupled to the output member O through the carrier coupling member 34. The carrier coupling member 34 is formed as a hollow shaft having a larger diameter than the rotor shaft 10, and the rotor shaft 10 passes through the inside of the carrier coupling member 34. The output member O is formed as a hollow shaft having a larger diameter than the carrier coupling member 34, and the rotor shaft 10 passes through the inside of the output member O, and one end portion of the carrier coupling member 34 is inserted into the inside of the output member O.

The output member O includes a cylindrical main body part 71 having an output gear 72 formed thereon; and a cylindrical part 73 having a cylindrical shape that axially protrudes from the main body part 71. The output gear 72 is formed on a central region of an outer circumferential surface of the main body part 71. The cylindrical part 73 is formed so as to protrude to the second planetary gear device PG2 side in the axial direction from the main body part 71. In the present embodiment, the cylindrical part 73 corresponds to a "first cylindrical part". In addition, the cylindrical part 73 is formed to be smaller in diameter than the main body part 71. The output member O is formed in stepped cylindrical shape whose diameter decreases in a stepwise manner from the central region where the output gear 72 is formed to an end side of the cylindrical part 73. The output member O is rotatably and radially supported on the case 2 (the middle support wall 26) by bearings 81 that fit on the outer circumferential surface of the main body part 71 on both sides of the output gear 72. In the present embodiment, the bearings 81 correspond to "output bearings".

The ring gear forming member 35 having the second ring gear R2 formed therein is coupled to the ring gear coupling member 40. The ring gear forming member 35 is supported on the middle support wall 26 through at least the ring gear coupling member 40. The ring gear coupling member 40 is coupled to the ring gear forming member 35 and rotates together with the ring gear forming member 35 (and the second ring gear R2). The ring gear coupling member 40 includes a radially extending part 41 and the supporting part 42. In the present embodiment, the ring gear coupling member 40 corresponds to a "third rotating element coupling member".

The radially extending part 41 is formed so as to radially extend from the ring gear forming member 35. The radially extending part 41 is formed in approximately stepped disc-like shape whose diameter decreases in a stepwise manner from the second planetary gear device PG2 side to an output member O side. The radially extending part 41 includes an external cylindrical part 43, an external annular disc-shaped part 44, the middle cylindrical part 45, a middle annular disc-shaped part 46, an internal cylindrical part 47, and an internal annular disc-shaped part 48. They are integrally formed. The external cylindrical part 43 is formed in cylindrical shape, and is coupled to the ring gear forming member 35 so as to rotate together with the ring gear forming member 35 at its end portion on the second planetary gear device PG2 side. The external annular disc-shaped part 44 is formed in annular disc-like shape, and extends downward from an end portion on the middle support wall 26 side of the external cylindrical part 43.

The middle cylindrical part 45 is formed in cylindrical shape, and extends to the middle support wall 26 side in the axial direction from a lower end portion of the external annular disc-shaped part 44. The middle annular disc-shaped part 46 is formed in annular disc-like shape, and extends downward from an end portion on the middle support wall 26 side of the middle cylindrical part 45. The internal cylindrical part 47 is formed in cylindrical shape, and extends to both axial sides from a lower end portion of the middle annular disc-shaped part 46. The internal cylindrical part 47 protrudes to both the output member O side and the second planetary gear device PG2 side in the axial direction. The internal annular disc-shaped part 48 is formed in annular disc-like shape, and extends downward from near an end portion on the second planetary gear device PG2 side of the internal cylindrical part 47. In the present embodiment, the middle cylindrical part 45 corresponds to a "third cylindrical part" and the internal cylindrical part 47 corresponds to a "second cylindrical part". In addition, the middle cylindrical part 45 corresponds to an "engagement-target tubular part".

In the present embodiment, the ring gear coupling member 40 (and the ring gear forming member 35 and the second ring gear R2) are rotatably and radially supported on the output member O by a bearing 82. In the present embodiment, the ring gear coupling member 40 and the output member O have overlapping portions as viewed in the radial direction, and the bearing 82 is disposed between the overlapping portions in the radial direction. Specifically, the internal cylindrical part 47 of the ring gear coupling member 40 and the cylindrical part 73 of the output member O are disposed so as to overlap each other as viewed in the radial direction, and the bearing 82 is disposed between an inner circumferential surface of the internal cylindrical part 47 and an outer circumferential surface of the cylindrical part 73. The ring gear coupling member 40 is rotatably and radially supported on the output member O by the bearing 82. In the present embodiment, the bearing 82 corresponds to a "support bearing".

In the present embodiment, the bearing 82 is disposed on the second planetary gear device PG2 side in the axial direction with respect to the main body part 71 of the output member O. In addition, the bearing 82 is disposed on the second planetary gear device PG2 side in the axial direction with respect to the bearings 81 that rotatably support the output member O on the case 2 (the middle support wall 26). Furthermore, the bearing 82 is disposed on a radial inner side with respect to the bearings 81.

In addition, the ring gear coupling member 40 is rotatably and axially supported on the case 2 (the middle support wall 26) by a bearing 83. The bearing 83 is disposed between an end portion on a radial inner side of the middle support wall 26 and the middle annular disc-shaped part 46 of the ring gear coupling member 40 in the axial direction. The bearing 83 is disposed at a location where the bearing 83 overlaps the output gear 72 and the bearings 81 as viewed in the axial direction. In addition, the bearing 83 is disposed at a location where the bearing 83 overlaps the internal cylindrical part 47, the bearing 82, and the cylindrical part 73 as viewed in the radial direction. Furthermore, a bearing 84 is disposed between the internal annular disc-shaped part 48 of the ring gear coupling member 40 and a flange part of the carrier coupling member 34 in the axial direction.

The supporting part 42 provided to the ring gear coupling member 40 is a part that supports the second SOWC 65. In the present embodiment, the supporting part 42 is provided on an outer surface of the middle cylindrical part 45 of the radially extending part 41 which is included in the ring gear coupling member 40. The supporting part 42 is disposed more on a radial inner side than an inner circumferential surface of the second ring gear R2. In addition, a surface of the supporting part 42 that supports the second SOWC 65 is disposed more on a radial inner side than an outer circumferential surface of the second carrier CA2.

The cylindrical part 27 is disposed at a location which is on a radial outer side of the middle cylindrical part 45 and in which the cylindrical part 27 overlaps the middle cylindrical part 45 as viewed in the radial direction. The cylindrical part 27 is formed so as to be slightly larger in diameter than the ring gear forming member 35, and the spline teeth 97 formed on an inner circumferential surface of the cylindrical part 27 overlap the ring gear forming member 35 as viewed in the axial direction. The second SOWC 65 is supported on an inner surface of the cylindrical part 27. The second SOWC 65 is disposed such that the outer engagement part 66B of the outer race 66 is engaged with the spline teeth 97 formed on the inner circumferential surface of the cylindrical part 27 and the retaining part 66C of the outer race 66 is supported on the spline teeth 98 formed on the middle cylindrical part 45.

### [Other embodiments]

(1) The above-described embodiment describes, as an example, a configuration in which the first SOWC 60 and the second SOWC 65 each can be switched between a free state, a one-way state, and a lock state. However, the configuration is not limited thereto and may be such that at least one of the first SOWC 60 and the second SOWC 65 can be switched between only two states among the free state, the one-way state, and the lock state.
(2) The above-described embodiment describes, as an example, a configuration in which the first SOWC 60 and the second SOWC 65 each include the outer race 61, 66 and a pair of the swingable engagement pieces 62, 67. However, the configuration is not limited thereto, and instead of at least one of the first SOWC 60 and the second SOWC 65, other types of mesh engagement devices, e.g., a dog clutch, may be used.
(3) The above-described embodiment describes, as an example, a configuration in which the brake hub 56 of the brake B also serves as the clutch drum of the clutch C. However, the configuration is not limited thereto, and the clutch drum and the brake hub 56 may be separately provided.
(4) The above-described embodiment describes, as an example, a configuration including the first planetary gear device PG1 that can switch between a direct-coupling state and a reduction state as a plurality of shift speeds. However, the configuration is not limited thereto, and the first planetary gear device PG1 may be able to switch between a direct-coupling state and an acceleration state as a plurality of shift speeds. In addition, the first planetary gear device PG1 may be able to switch the shift speed between three or more states. In addition, the first planetary gear device PG1 may be a transmission device with a fixed gear ratio. Furthermore, the first planetary gear device PG1 may not be provided.
(5) The above-described embodiment describes, as an example, a configuration in which the spline teeth 94 and the spline teeth 95 are axially continuously and integrally formed on the cylindrical surface part 22 of the circumferential wall 21 of the case 2. However, the configuration is not limited thereto, and the spline teeth 94 and the spline teeth 95 may be separately formed.
(6) The above-described embodiment describes, as an example, a configuration in which the spline teeth 93 and the spline teeth 96 are axially continuously and integrally formed on the outer circumferential surface of the brake hub 56. However, the configuration is not limited thereto, and the spline teeth 93 and the spline teeth 96 may be separately formed.
(7) The above-described embodiment describes, as an example, a configuration in which the supporting part 42 provided to the ring gear coupling member 40 is disposed more on the radial inner side than the inner circumferential surface of the second ring gear R2. However, the configuration is not limited thereto, and the supporting part 42 may be disposed at the same radial location as the inner circumferential surface of the second ring gear R2 or may be disposed more on a radial outer side than the inner circumferential surface of the second ring gear R2.
(8) In the above-described embodiment, a description is made mainly assuming a configuration in which the brake B is a hydraulically actuated multi-plate brake. However, the configuration is not limited thereto, and the brake B may be, for example, a band brake.
(9) The above-described embodiment describes, as an example, a configuration in which the bearing 82 is radially supported by the output member O. However, the configuration is not limited thereto, and the bearing 82 may be radially supported by the carrier coupling member 34 coupled to the second carrier CA of the second planetary gear device PG2. In this case, the carrier coupling member 34 corresponds to an "output member".
(10) A configuration disclosed in each of the above-described embodiments (including the above-described embodiment and other embodiments; the same applies hereinafter) can also be applied in combination with a configuration disclosed in another embodiment as long as a contradiction does not arise. For other configurations, too, the embodiments disclosed in this specification are in all respects illustrative, and modifications can be made therein as appropriate without departing from the true spirit and scope of the present disclosure.

### [Summary of the embodiments]

In conclusion, a vehicle drive device according to the present disclosure preferably has the following configurations.

A vehicle drive device (1) includes:
a rotating electrical machine (MG);
an output member (O) that is drive-coupled to wheels (W);
a reduction planetary gear device (PG2) provided in a power transmission path connecting the rotating electrical machine (MG) to the output member (O); and
a case (2) that contains the rotating electrical machine (MG) and the reduction planetary gear device (PG2), and
the output member (O) and the reduction planetary gear device (PG2) are coaxially and axially disposed side by side,
the reduction planetary gear device (PG2) includes a first rotating element (S2) that is drive-coupled to the rotating electrical machine (MG); a second rotating element (CA2) that is drive-coupled to the output member (O); and a third rotating element (R2) that is selectively fixed to the case (2) by an engagement device (65), and
a support bearing (82) that rotatably supports the third rotating element (R2) is radially supported by the output member (O).

According to this configuration, the support bearing (82) that rotatably and radially supports the third rotating element (R2) is radially supported by the output member (O) that rotates in conjunction with the wheels (W), instead of by the case (2) that is always irrotational. Hence, even when the third rotating element (R2) is fixed by the engagement device (65), as long as the wheels (W) rotate, the support bearing (82) also rotates, and thus, it is easy to avoid a specific-phase state from being maintained for a long period of time. Thus, protection of a bearing (the support bearing (82)) that rotatably supports the ring gear (R2) can be easily achieved.

In one aspect,
it is preferred that the output member (O) include a main body part (71) on which an output gear (72) is formed; and a first cylindrical part (73) having a cylindrical shape that protrudes to a reduction planetary gear device (PG2) side in an axial direction from the main body part (71), and
the support bearing (82) be supported on an outer circumferential surface of the first cylindrical part (73).

According to this configuration, since the support bearing (82) is supported by the first cylindrical part (73) that protrudes to the reduction planetary gear device (PG2) side, the third rotating element (R2) of the reduction planetary gear device (PG2) can be appropriately supported with a relatively simple configuration.

In one aspect,
it is preferred that the vehicle drive device include a third rotating element coupling member (40) that is coupled to the third rotating element (R2) and rotates together with the third rotating element (R2),
the third rotating element coupling member (40) include a second cylindrical part (47) having a cylindrical shape that protrudes to an output member (O) side in an axial direction, and
the support bearing (82) be supported on an inner circumferential surface of the second cylindrical part (47).

According to this configuration, since the support bearing (82) is supported by the second cylindrical part (47) that protrudes to the output member (O) side, the third rotating element (R2) and the third rotating element coupling member (40) coupled to the third rotating element (R2) can be appropriately and radially supported by the output member (O) with a relatively simple configuration.

In one aspect, it is preferred that the third rotating element (R2) be a ring gear (R2),
a ring gear coupling member (40) that is the third rotating element coupling member (40) include a radially extending part (41) that radially extends from a ring gear forming member (35) in which the ring gear (R2) is formed; and a third cylindrical part (45) having a cylindrical shape that axially protrudes from the radially extending part (41) and supports the engagement device (65), and
the second cylindrical part (47) be disposed more on a radial inner side than the third cylindrical part (45).

According to this configuration, since the third cylindrical part (45) is provided so as to axially protrude from the radially extending part (41), it is easy to provide the third cylindrical part (45) at a location closer to an axial center. Since the engagement device (65) is supported by the third cylindrical part (45), it becomes easy to dispose the engagement device (65) at a location closer to the axial center. By this, noise to be generated can be reduced using the engagement device (65) with a smaller diameter, and a long path length from the reduction planetary gear device (PG2) to the engagement device (65) is taken due to the presence of the ring gear coupling member (40), by which noise reduction can be achieved. Thus, low-noise properties and small-vibration properties can be improved. Furthermore, since the support bearing (82) is supported by the second cylindrical part (47) that is disposed more on the radial inner side than the third cylindrical part (45), the ring gear coupling member (40) and the ring gear (R2) can be appropriately supported at a location closer to the axial center.

In one aspect,
it is preferred that the vehicle drive device further include a transmission planetary gear device (PG1) provided between the rotating electrical machine (MG) and the reduction planetary gear device (PG2) in the power transmission path, and
the transmission planetary gear device (PG1) be able to switch between a plurality of shift speeds.

According to this configuration, by a combination of the reduction planetary gear device (PG2) and the transmission planetary gear device (PG1), a plurality of different gear ratios can be implemented.

In one aspect,
it is preferred that the output member (O) be disposed between the rotating electrical machine (MG) and the reduction planetary gear device (PG2) in an axial direction,
the output member (O) include a main body part (71) on which an output gear (72) is formed, and
the support bearing (82) be disposed on a reduction planetary gear device (PG2) side in an axial direction of the main body part (71).

According to this configuration, since the support bearing (82) is disposed more on the reduction planetary gear device (PG2) side than the main body part (71) on which the output gear (72) is formed, the third rotating element (R2) of the reduction planetary gear device (PG2) can be appropriately supported with a relatively simple configuration.

In one aspect,
it is preferred that the vehicle drive device further include output bearings (81) that rotatably and radially support the output member (O) on the case (2), and
the support bearing (82) be disposed more on a reduction planetary gear device (PG2) side in an axial direction and more on a radial inner side than the output bearings (81).

According to this configuration, since the output member (O) is further supported on the case (2) by the output bearings (81) having a relatively large diameter, the output member (O) can be stably supported. In addition, by disposing the support bearing (82) on the reduction planetary gear device (PG2) side and on the radial inner side, the third rotating element (R2) of the reduction planetary gear device (PG2) can be appropriately supported with a relatively simple configuration, and it is easy to create space on a radial outer side of the support bearing (82), by which it is easy to increase disposition efficiency for other members.

In one aspect,
it is preferred that the engagement device (65) be a mesh engagement device (65) that can be switched between at least a lock state in which rotation of the third rotating element (R2) is blocked and a free state in which the third rotating element (R2) is allowed to rotate in both directions, depending on whether there is mechanical meshing.

According to this configuration, by bringing the engagement device (65) into a lock state, the ring gear (R2) of the reduction planetary gear device (PG2) is fixed to the case (2), and rotation inputted from the rotating electrical machine (MG) side is reduced in speed and can be outputted to the output member (O) side. In addition, by bringing the engagement device (65) into a free state, each component provided more on an upstream side than the reduction planetary gear device (PG2) can be decoupled from the wheels (W). Switching between the lock state and the free state can be appropriately performed in a compact manner, using a simple mechanism for controlling whether there is mechanical meshing.

In one aspect,
it is preferred that the mesh engagement device (65) be a selectable one-way clutch including a pair of engagement pieces (67) that is engaged with and disengaged from spline teeth (98) provided on an engagement-target tubular part (45).

According to this configuration, switching between a lock state and a free state can be appropriately performed using a compact mechanism.

In one aspect,
it is preferred that the engagement device (65) be configured to connect or disconnect the rotating electrical machine (MG) and the output member (O) in the power transmission path.

When the engagement device (65) is configured to connect or disconnect the rotating electrical machine (MG) and the output member (O) as this configuration, it is often the case that the engagement device (65) is disposed close to the output member (O), taking into account a rotational load generated by co-rotation occurring in a neutral position. In such a case, by supporting the support bearing (82) by the output member (O), the engagement device (65) can be configured more simply compared to a configuration in which the engagement device (65) is supported by, for example, an input member that rotates together with the rotor of the rotating electrical machine (MG).

In one aspect,
it is preferred that the vehicle drive device include a third rotating element coupling member (40) that is coupled to the third rotating element (R2) and rotates together with the third rotating element (R2),
the case (2) include a case main body; and a supporting part (26) formed as a different part than the case main body and disposed between the output member (O) and the reduction planetary gear device (PG2) in an axial direction, and
the output member (O), the third rotating element coupling member (40), and the engagement device (65) be supported on the supporting wall part (26).

According to this configuration, by supporting the output member (O), the third rotating element coupling member (40), and the engagement device (65) by the supporting wall part (26) having a high degree of flexibility in shape, compared to a case of supporting by, for example, the case main body, each member can be more appropriately supported.

It is sufficient that the vehicle drive device according to the present disclosure be able to provide at least one of the above-described advantageous effects.

### REFERENCE SIGNS LIST

1: Vehicle drive device, 2: Case, 10: Rotor shaft, 22: Cylindrical surface part, 26: Middle support wall (supporting part), 27: Cylindrical part, 35: Ring gear forming member, 40: Ring gear coupling member (third rotating element coupling member), 41: Radially extending part, 42: Supporting part, 45: Middle cylindrical part (third cylindrical part and engagement-target tubular part), 47: Internal cylindrical part (second cylindrical part), 52: Friction plate, 52A: Inner friction plate, 52B: Outer friction plate, 56: Brake hub, 57: Friction plate, 57A: Inner friction plate, 57B: Outer friction plate, 60: First SOWC, 61: Outer race, 62: Engagement piece, 62A: First engagement piece, 62B: Second engagement piece, 65: Second SOWC (engagement device), 66: Outer race, 67: Engagement piece, 71: Main body part, 72: Output gear, 73: Cylindrical part (first cylindrical part), 81: Bearing (output bearing), 82: Bearing (support bearing), 92: Spline teeth, 93: Spline teeth, 94: Spline teeth, 95: Spline teeth, 96: Spline teeth, MG: Rotating electrical machine, PG1: First planetary gear device (transmission planetary gear device), PG2: Second planetary gear device (reduction planetary gear device), S2: Second sun gear (first rotating element), P2: Second pinion gear, CA2: Second carrier (second rotating element), R2: Second ring gear (third rotating element and ring gear), C: Clutch, B: Brake, O: Output member, and W: Wheel

## Claims

1. A vehicle drive device comprising:
a rotating electrical machine;
an output member that is drive-coupled to wheels;
a reduction planetary gear device provided in a power transmission path connecting the rotating electrical machine to the output member; and
a case that contains the rotating electrical machine and the reduction planetary gear device,
wherein
the output member and the reduction planetary gear device are coaxially and axially disposed side by side,
the reduction planetary gear device includes a first rotating element that is drive-coupled to the rotating electrical machine; a second rotating element that is drive-coupled to the output member; and a third rotating element that is selectively fixed to the case by an engagement device, and
a support bearing that rotatably supports the third rotating element is radially supported by the output member.

2. The vehicle drive device according to claim 1, wherein
the output member includes a main body part on which an output gear is formed; and a first cylindrical part having a cylindrical shape that protrudes to a reduction planetary gear device side in an axial direction from the main body part, and
the support bearing is supported on an outer circumferential surface of the first cylindrical part.

3. The vehicle drive device according to claim 1 or 2, comprising a third rotating element coupling member that is coupled to the third rotating element and rotates together with the third rotating element,
wherein
the third rotating element coupling member includes a second cylindrical part having a cylindrical shape that protrudes to an output member side in an axial direction, and
the support bearing is supported on an inner circumferential surface of the second cylindrical part.

4. The vehicle drive device according to claim 3, wherein
the third rotating element is a ring gear,
a ring gear coupling member that is the third rotating element coupling member includes a radially extending part that radially extends from a ring gear forming member in which the ring gear is formed; and a third cylindrical part having a cylindrical shape that axially protrudes from the radially extending part and supports the engagement device, and
the second cylindrical part is disposed more on a radial inner side than the third cylindrical part.

5. The vehicle drive device according to any one of claims 1 to 4, further comprising a transmission planetary gear device provided between the rotating electrical machine and the reduction planetary gear device in the power transmission path,
wherein
the transmission planetary gear device can switch between a plurality of shift speeds.

6. The vehicle drive device according to any one of claims 1 to 5, wherein
the output member is disposed between the rotating electrical machine and the reduction planetary gear device in an axial direction,
the output member includes a main body part on which an output gear is formed, and
the support bearing is disposed on a reduction planetary gear device side in an axial direction of the main body part.

7. The vehicle drive device according to any one of claims 1 to 6, further comprising output bearings that rotatably and radially support the output member on the case,
wherein
the support bearing is disposed more on a reduction planetary gear device side in an axial direction and more on a radial inner side than the output bearings.

8. The vehicle drive device according to any one of claims 1 to 7, wherein the engagement device is a mesh engagement device that can be switched between at least a lock state in which rotation of the third rotating element is blocked and a free state in which the third rotating element is allowed to rotate in both directions, depending on whether there is mechanical meshing.

9. The vehicle drive device according to claim 8, wherein the mesh engagement device is a selectable one-way clutch including a pair of engagement pieces that is engaged with and disengaged from spline teeth provided on an engagement-target tubular part.

10. The vehicle drive device according to any one of claims 1 to 9, wherein the engagement device is configured to connect or disconnect the rotating electrical machine and the output member in the power transmission path.

11. The vehicle drive device according to any one of claims 1 to 10, comprising a third rotating element coupling member that is coupled to the third rotating element and rotates together with the third rotating element,
wherein
the case includes a case main body; and a supporting part formed as a different part than the case main body and disposed between the output member and the reduction planetary gear device in an axial direction, and
the output member, the third rotating element coupling member, and the engagement device are supported on the supporting wall part.
